# DEMANDE DE BREVET EUROPEEN

(11) **EP 1 162 835 A1**
(43) Date de publication de la demande: **12.12.2001**
(21) Numéro de dépôt: 01401442.7
(22) Date de dépôt: 01.06.2001
(51) Int. Cl.: H04N 5/445

(54) **Décodeur de télévision numérique avec assistance**

(30) Priorité: 06.06.2000 FR 0007259
(71) Demandeur: SAGEM S.A., 75015 Paris (FR)
(72) Inventeur: Cummings, John, F-78600 Maisons-Laffitte (FR); Mortreux, Bruno, F-76 530 Les Essarts (FR); Le Borgne, Yves M., 78260 Achères (FR)
(74) Mandataire: Schmit, Christian Norbert Marie

(57) **Abrégé**

L'invention concerne un décodeur de télévision numérique (100) proposant un ensemble de fonctionnalités. Le décodeur selon l'invention comporte, dans une mémoire de données (114), une unité d'assistance (115) destinée à faciliter l'utilisation du décodeur numérique.

Différents modes de mise en oeuvre et de présentation sont proposés. En outre, le décodeur selon l'invention permet d'obtenir des mises à jour de l'unité d'assistance par exemple via une interface de communication (110) du décodeur numérique.

## Description

La présente invention a pour objet un décodeur de télévision numérique disposant d'une assistance.

Elle permet à un utilisateur du décodeur numérique considéré de disposer d'un outil d'aide à l'utilisation du décodeur et à l'utilisation des différents services qu'il est susceptible de proposer. Cet outil d'aide à l'utilisation est contenu dans le décodeur même et est accessible à un utilisateur sous différentes formes : séquences vidéo, aide en ligne, séquences sonores, messages affichés sous la forme de texte ou d'icônes sur un écran de télévision....

D'une façon générale, le domaine de l'invention est celui de la télévision numérique. Dans ce domaine, des décodeurs de télévision numérique sont utilisés, notamment afin d'accéder à un ensemble de chaînes de télévision cryptées. Les décodeurs de télévision sont des organes interface entre des systèmes de transmission de signaux de télévision, notamment de signaux de télévision numérique au format MPEG et DVB, et des moniteurs de visualisation. Souvent le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques. Les moyens de transmission qui transmettent des émissions de télévision à ces décodeurs récepteurs sont soit des moyens de transmission aériens classiques, soit des câbles coaxiaux, voire optiques, soit des satellites de ré-émission qui desservent une région.

Du fait du développement d'une synergie entre différents domaines distincts tels que celui de la télévision numérique, celui de la téléphonie mobile, celui des communications Internet... les décodeurs de télévision numérique deviennent de plus en plus complexes d'utilisation. Par exemple, il est désormais connu de fabriquer des décodeurs numériques équipés d'interfaces de communication qui permettent de se connecter au réseau Internet, notamment pour consulter et envoyer des messages électroniques, et qui permettent également de se connecter à un réseau de radiotéléphonie cellulaire. L'utilisation d'un décodeur numérique devient donc de plus en plus complexe du fait de la multiplicité des services qu'il propose.

A l'achat d'un décodeur numérique, un utilisateur dispose le plus souvent d'un livret destiné d'une part à l'aider dans l'installation de son décodeur numérique, et d'autre part à lui expliquer le fonctionnement des différentes fonctionnalités qui sont proposées dans le décodeur numérique tel qu'il l'a acheté.

L'utilisation d'un tel livret est relativement contraignante et pose certains problèmes matériels. Un premier problème qui apparaît est le risque d'égarer le livret contenant les explications. Un autre problème est que les explications des différentes opérations à effectuer pour installer ou pour se servir du décodeur numérique sont limitées, dans un livret, à une succession d'explications écrites éventuellement accompagnées de schémas. Ces formes d'explications ne sont pas toujours intelligibles par l'ensemble des utilisateurs. Par ailleurs, le livret n'est pas susceptible d'évoluer. Son contenu est définitif et il ne peut pas suivre d'éventuelles modifications ou d'éventuelles apparitions de fonctionnalités du décodeur numérique.

Le décodeur numérique selon l'invention répond à l'ensemble de ces problèmes. A cet effet, une zone de mémoire spécifique d'une mémoire de données du décodeur numérique est réservée au stockage d'informations relatives à des explications, à une assistance, ayant trait à la mise en place et au fonctionnement du décodeur numérique. L'ensemble des explications nécessaires à une bonne utilisation du décodeur numérique est ainsi en permanence indissociable du décodeur numérique et ne peut pas être égaré. Cet ensemble d'informations sera par la suite désigné comme l'unité d'assistance du décodeur numérique. Par ailleurs, le décodeur numérique étant connecté à un appareil de visualisation de type télévision, les informations destinées à l'assistance de l'utilisateur peuvent être disponibles sous différentes formes lorsque l'utilisateur sollicite leur consultation: différents menus peuvent être proposés sur l'écran de télévision pour préciser la nature de l'information recherchée ; des séquences vidéo préenregistrées dans la zone de mémoire spécifique peuvent être diffusées sur l'écran de télévision, des signaux sonores tels que des explications vocales peuvent être utilisés, de nombreux schémas et commentaires peuvent également être affichés sur l'écran de télévision. Enfin, grâce à une interface de communication du décodeur numérique, les données de l'unité d'assistance peuvent être régulièrement mises à jour de façon automatique ou suite à une sollicitation de l'utilisateur. Le décodeur numérique selon l'invention offre donc à ses utilisateurs la possibilité d'accéder immédiatement à des explications du fonctionnement de nouvelles fonctionnalités téléchargées dans le décodeur, qui n'étaient, par définition, pas proposées par le décodeur tel que les utilisateurs l'avaient installé. L'utilisateur n'a pas à se soucier de se procurer différentes notices explicatives, et il est moins amené à solliciter des personnes responsables de la mise en place des nouvelles fonctionnalités.

L'invention a donc pour objet un décodeur de télévision numérique recevant un flux d'informations comprenant notamment une mémoire de programmes, une mémoire de données et un microprocesseur, caractérisé en ce qu'il comporte dans la mémoire de données une unité d'assistance destinée à faciliter l'installation et l'utilisation du décodeur numérique.

L'unité d'assistance peut être programmée dans la mémoire de données avant une première utilisation du décodeur ou être téléchargée via une interface de communication du décodeur dès la mise sous tension du décodeur. Différents moyens sont mis en oeuvre au sein du décodeur pour transmettre automatiquement une mise à jour de l'unité d'assistance au décodeur numérique soit via l'interface de communication du décodeur, soit via le flux d'informations reçues par le décodeur. Dans le cas d'un téléchargement automatique de la mise à jour de l'unité d'assistance, des moyens d'avertissement sont mis en oeuvre pour indiquer à l'utilisateur qu'une mise à jour a été automatiquement transmise. Selon un autre mode de fonctionnement du décodeur selon l'invention, un site Internet spécialisé auquel l'utilisateur du décodeur peut accéder permet de télécharger une mise à jour de l'unité d'assistance lorsque l'utilisateur le souhaite.

Dans un mode de réalisation préféré de l'invention, l'unité d'assistance comporte plusieurs rubriques qui sont à accès aléatoire. D'une façon générale, le décodeur de télévision numérique selon l'invention comporte des moyens pour présenter une ou plusieurs rubriques de l'unité d'assistance sous différentes formes. Enfin, des moyens sont mis en oeuvre pour que l'unité d'assistance soit disponible en plusieurs langues au sein du décodeur numérique.

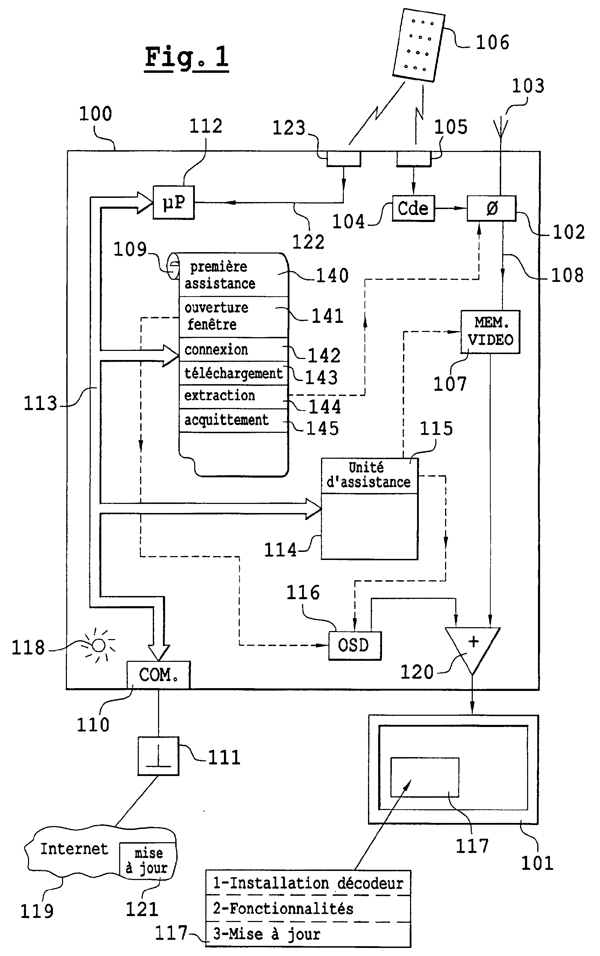

L'invention et ses différentes applications seront mieux comprises à la lecture de la description qui suit et à l'examen de la figure qui l'accompagne. Celle-ci n'est présentée qu'à titre indicatif et nullement limitatif de l'invention. La figure 1, unique, montre un exemple d'une structure interne simplifiée du décodeur numérique selon l'invention.

La figure 1 montre un décodeur de télévision numérique 100 connecté à un téléviseur 101. Le décodeur 100 comporte un module de réception 102 de signaux télévisuels qui reçoit via une antenne 103 un flux d'informations. Ce flux d'informations est composé notamment de signaux audio et vidéo destinés à être diffusés éventuellement après un décodage spécifique du décodeur numérique, ainsi que d'un ensemble d'informations destinées à mettre en oeuvre de nouvelles fonctionnalités au sein du décodeur. Le module de réception 102 pourrait être également connecté à un réseau de télévision câblé ou à un système de réception par satellite. Par ailleurs, le module de réception 102 est connecté à un circuit de commande 104 du module de réception 102. Le circuit de commande 104 indique au module de réception 102 quel programme de télévision il doit extraire du flux d'informations qu'il reçoit par l'antenne 103. Un capteur 105, dans cet exemple infrarouge, reçoit des signaux émis par une télécommande 106. Une cellule infrarouge du capteur 105 délivre un signal qui permet à l'utilisateur de contrôler le circuit de commande 104. Les signaux numérisés audio et/ou vidéo issus du module de réception 102 sont envoyés dans une mémoire vidéo 107, via une liaison unidirectionnelle 108. Selon des variantes de réalisation de l'invention, le décodeur numérique 100 peut comporter des unités de compression et de décompression des signaux audio et/ou vidéo.

Une mémoire de programmes 109 est destinée à la gestion des différentes opérations qui peuvent intervenir pour mettre en oeuvre différentes fonctionnalités du décodeur numérique 100. Une interface de communication 110 comprenant notamment un modem, permet de communiquer, via une prise téléphonique 111 externe au décodeur 100, avec un réseau du type réseau Internet 119 ou encore avec un réseau de radiotéléphonie cellulaire.

Un microprocesseur 112 est relié au moyen d'un bus de communication bidirectionnel 113 à l'interface de communication 110, à la mémoire de programme 109, et à une mémoire de données 114. Le bus de communication bidirectionnel 113 véhicule des signaux de commandes, d'adresses ou de données. Grâce à lui, le microprocesseur 112 peut gérer un ensemble d'opérations intervenant dans le fonctionnement du décodeur, et peut contrôler notamment un ensemble d'applications de la mémoire de programmes 109 destinées à la mise en oeuvre de l'unité d'assistance. Ces applications peuvent, dans certains modes de réalisation du décodeur selon l'invention, être remplacées par des circuits électroniques spécialisés dont le fonctionnement est géré par le microprocesseur 112. Un module d'OSD 116 (On Screen Display dans la littérature anglaise), qui permet notamment d'afficher certains éléments graphiques contenus dans l'unité d'assistance, est connecté à un module de superposition 120 qui reçoit par ailleurs les informations contenues dans la mémoire vidéo 107.

Le fonctionnement du décodeur numérique selon l'invention est à présent expliqué.

Dans un mode de réalisation préféré de l'invention, la mémoire de données 114 comporte une zone spécifique de mémoire 115 susceptible de recevoir et de mémoriser un ensemble de données constituant une unité d'assistance pour l'utilisateur du décodeur numérique 100. Dans un exemple, l'unité d'assistance peut être programmée dans l'unité de mémoire spécifique 115 dès la fabrication du décodeur numérique 100. Dans ce cas, dès que l'utilisateur connecte le décodeur numérique 100 au téléviseur 101 et qu'il met le décodeur numérique 100 sous tension, les informations contenues dans l'unité d'assistance sont proposées de façon automatique grâce à une application 140, dite application de première assistance, de la mémoire de programmes 109. Ainsi, dès la mise sous tension du décodeur numérique, l'unité d'assistance affiche au moyen du module d'OSD 116 une fenêtre graphique 117 comportant un menu qui propose à l'utilisateur un certain nombre de rubriques destinées à son aide dans la mise en service et l'utilisation du décodeur numérique 100. Une application 141, dite application d'ouverture de fenêtre graphique est utilisée à cet effet. Les informations relatives au menu sont contenues dans la zone de mémoire spécifique 115.

Parmi ces rubriques, on peut par exemple trouver une rubrique d'installation du décodeur. Dans cette première rubrique une séquence vidéo de l'unité d'assistance peut par exemple être affichée dans la fenêtre graphique 117 ou sur la totalité de l'écran de télévision 101, les informations contenues dans l'unité d'assistance transitant alors selon le cas soit par le module d'OSD 116, soit par la mémoire vidéo 107. La séquence vidéo peut consister en un petit film montrant les différentes opérations nécessaires pour mettre le décodeur en service (branchement de l'antenne, introduction d'une carte à puce...). Pour cette première rubrique, tout comme pour les autres rubriques proposées dans le menu, d'autres formes de présentation de cette rubrique sont envisageables : on peut par exemple proposer les différentes étapes d'installation sous forme de plusieurs schémas affichés simultanément à l'écran, ou apparaissant les uns après les autres, ou encore sous forme de texte, les informations ainsi proposées étant éventuellement accompagnées d'une bande sonore relatant les différentes étapes à suivre. Le décodeur selon l'invention dispose d'un ensemble de moyens visuels ou auditifs de restitution d'informations pour rendre convivial et intelligible le contenu de l'unité d'assistance.

Une deuxième rubrique proposée dans le menu peut être destinée à l'explication des différentes fonctionnalités offertes par le décodeur numérique, et à leur mise en oeuvre. Par exemple, si le décodeur numérique offre la possibilité de se connecter au réseau Internet, cette rubrique permet d'obtenir une assistance qui aide à se remémorer les différentes opérations à suivre pour se connecter au réseau Internet ou à un réseau de radiotéléphonie cellulaire au moyen du décodeur numérique 100. Un mode de présentation envisageable de cette rubrique peut par exemple consister dans la présentation successive sur l'écran de télévision 101 des différentes étapes à observer, chacune des étapes étant illustrée au moyen d'un dessin ou d'une photographie accompagnée d'un texte, chaque étape à suivre ne disparaissant de l'écran et ne laissant place à l'étape suivante que lorsqu'elle a été exécutée par l'utilisateur. A cet effet, une application 145, dite application d'acquittement, de la mémoire de programmes 109 est mise en oeuvre : cette application est capable de détecter chaque opération effectuée par l'utilisateur, de s'assurer qu'elle correspond bien à l'opération attendue, et de montrer à l'utilisateur l'étape suivante à exécuter.

Une troisième rubrique qui peut être proposée dans le menu apparaissant dans la fenêtre graphique 117 peut être destinée à la mise à jour de l'unité d'assistance. Cette rubrique est essentiellement utilisée lorsque le décodeur numérique n'effectue pas automatiquement la mise à jour de l'unité d'assistance. Encore une fois, les différentes étapes à suivre peuvent être présentées sous différentes formes qui sont les plus conviviales possible.

Les opérations de mise à jour de l'unité d'assistance peuvent, dans une application préférée de l'invention, quand elles ne sont pas automatiques, faire intervenir une connexion du décodeur numérique sur un site Internet spécialisé via l'interface de communication 110. A cet effet, une application 142, dite application de connexion sur un site spécialisé, est exécutée. Sur ce site, l'utilisateur a le choix entre plusieurs unités d'assistance, qu'il doit choisir en fonction du type de décodeur numérique qu'il possède. Un tel mode de fonctionnement permet notamment de choisir la langue dans laquelle l'unité d'assistance sera proposée. La version de l'unité d'assistance choisie est téléchargée dans la zone de la mémoire de données 109 réservée à l'unité d'assistance grâce à une application 143, dite application de téléchargement, de la mémoire de programmes 109.

Dans une version améliorée de l'invention, le décodeur numérique effectue automatiquement la mise à jour de l'unité d'assistance. A cet effet, il télécharge depuis un site spécialisé 121 via le réseau Internet et via son interface de communication 110 un ensemble de données qui permettent de mettre à jour l'unité d'assistance. A cet effet, l'application de connexion à un site spécialisé 142 et l'application de téléchargement 143 sont mises en oeuvre de façon automatique. La mise à jour automatique peut également être effectuée au moyen de données qui sont transmises simultanément au flux d'informations audio et vidéo reçues via l'antenne 103 du décodeur numérique. A cet effet, une application 144, dite application d'extraction, de la mémoire de programmes 109 permet d'identifier et d'extraire du flux d'informations reçu par le module de réception 102 les informations destinées à la mise à jour de l'unité d'assistance, et de les mémoriser dans la zone réservée 115 de la mémoire de données 114.

Le décodeur numérique 100 peut, dans un mode de réalisation préféré de l'invention, comporter des moyens d'avertissement pour indiquer qu'une mise à jour de l'unité d'assistance a été automatiquement transmise au décodeur numérique. Ces moyens peuvent par exemple être un témoin lumineux 118 disposé sur le décodeur numérique.

Le décodeur selon l'invention présente une grande convivialité du fait qu'il permet à l'utilisateur du décodeur d'obtenir rapidement et simplement un ensemble d'informations qui l'aident dans l'utilisation et l'installation du décodeur. En outre, les différentes rubriques proposées dans l'unité d'assistance sont à accès aléatoire : cela signifie que lorsqu'un menu est proposé à l'utilisateur, celui-ci peut par exemple au moyen de sa télécommande 106 sélectionner une rubrique qui l'intéresse plus particulièrement. D'une façon générale, l'utilisateur peut contrôler l'ensemble des applications de la mémoire de programmes 109 au moyen de la télécommande 106. A cet effet, le microprocesseur 112 est relié au moyen d'une liaison unidirectionnelle 122 à un deuxième capteur 123 qui est de préférence semblable au premier capteur 105 ou même confondu avec lui. L'utilisateur peut également sélectionner les différentes rubriques du menu au moyen de la télécommande 106.

Les rubriques qui ont été décrites dans le menu ne sont pas limitatives de l'invention ; le menu peut proposer toute autre forme de rubrique susceptible d'aider l'utilisateur dans la manipulation de son décodeur numérique, quelles que soient les fonctionnalités qui sont envisagées pour ce dernier.

## Revendications

1. Décodeur de télévision numérique (100) recevant un flux d'informations comprenant notamment une mémoire de programmes (109), une mémoire de données (114) et un microprocesseur (112), **caractérisé en ce qu'**il comporte dans la mémoire de données (114) une unité d'assistance (115) destinée à faciliter l'installation et l'utilisation du décodeur.

2. Décodeur de télévision numérique (100) selon la revendication 1 **caractérisé en ce que** l'unité d'assistance (115) est programmée dans la mémoire de données (114) avant une première utilisation du décodeur.

3. Décodeur de télévision numérique (100) selon la revendication 1 **caractérisé en ce que** l'unité d'assistance (115) est téléchargée, via une interface de communication (110) du décodeur, dès la mise sous tension du décodeur.

4. Décodeur de télévision numérique (100) selon l'une des revendications précédentes **caractérisé en ce que** il comprend des moyens (142 ; 143 ; 144) pour transmettre automatiquement une mise à jour de l'unité d'assistance (115) au décodeur.

5. Décodeur de télévision numérique (100) selon la revendication 4 **caractérisé en ce que** la transmission automatique de la mise à jour de l'unité d'assistance (115) est effectuée via l'interface de communication (110) du décodeur.

6. Décodeur de télévision numérique (100) selon la revendication 4 **caractérisé en ce que** la transmission automatique de la mise à jour de l'unité d'assistance est effectuée via le flux d'informations reçues par le décodeur.

7. Décodeur de télévision numérique (100) selon l'une des revendications 4 à 6 **caractérisé en ce qu'**il comprend des moyens d'avertissement (118) pour indiquer qu'une mise à jour de l'unité d'assistance (115) a été automatiquement transmise au décodeur numérique.

8. Décodeur de télévision numérique (100) selon la revendication 1 **caractérisé en ce qu'**il comprend des moyens (110; 142; 143) pour télécharger depuis un site Internet spécialisé (121) une mise à jour de l'unité d'assistance (115).

9. Décodeur de télévision numérique (100) selon l'une des revendications précédentes **caractérisé en ce que** l'unité d'assistance (115) comporte plusieurs rubriques qui sont à accès aléatoire.

10. Décodeur de télévision numérique selon l'une des revendications précédentes **caractérisé en ce qu'**il comporte des moyens pour présenter une ou plusieurs rubriques de l'unité d'assistance (115) sous différentes formes.

11. Décodeur de télévision numérique (100) selon l'une des revendications précédentes **caractérisé en ce que** l'unité d'assistance (115) est disponible en plusieurs langues.
